(19) **Europäisches Patentamt / European Patent Office / Office européen des brevets**

(11) **EP 2 004 558 B1**

(12) **FASCICULE DE BREVET EUROPEEN**

(45) Date de publication et mention
de la délivrance du brevet:
**28.03.2012 Bulletin 2012/13**

(21) Numéro de dépôt: **07731872.3**

(22) Date de dépôt: **04.04.2007**

(51) Int Cl.:
***C03B 5/20*** *(2006.01)*     ***C03B 5/235*** *(2006.01)*

(86) Numéro de dépôt international:
**PCT/FR2007/051069**

(87) Numéro de publication internationale:
**WO 2007/116183 (18.10.2007 Gazette 2007/42)**

(54) **FOUR À BRÛLEUR IMMERGÉ ET BRÛLEUR AÉRIEN**

OFEN MIT TAUCHBRENNER UND ÜBERKOPFBRENNER

FURNACE WITH IMMERSED BURNER AND OVERHEAD BURNER

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **07.04.2006 FR 0651258**

(43) Date de publication de la demande:
**24.12.2008 Bulletin 2008/52**

(73) Titulaire: **Saint-Gobain Glass France S.A.
92400 Courbevoie (FR)**

(72) Inventeurs:
- **PIERROT, Laurent
  75018 Paris (FR)**
- **LOPEPE, Frédéric
  33400 Salinas (FR)**
- **PALMIERI, Biagio
  60200 Compiegne (FR)**
- **JOUBAUD, Laurent
  75010 Paris (FR)**
- **PEDEBOSCQ, Philippe
  75018 Paris (FR)**
- **MEUNIER, Philippe
  60280 Margny Les Compiegnes (FR)**

(74) Mandataire: **Colombier, Christian
Département Propriété Industrielle
SAINT-GOBAIN RECHERCHE
39 Quai Lucien Lefranc
93300 Aubervilliers (FR)**

(56) Documents cités:
**EP-A2- 1 236 691     WO-A-02/090271
US-A- 5 139 558**

- **DATABASE WPI Week 197512 Derwent Publications Ltd., London, GB; AN 1975-20573W XP002408769 -& SU 425 853 A (POLEVOI R P ET AL) 30 avril 1974 (1974-04-30)**

EP 2 004 558 B1

**Description**

L'invention concerne un four de fusion de matières vitrifiables (du verre) comprenant un brûleur immergé combiné à un brûleur aérien. Le brûleur immergé peut notamment agir comme barrage aux matières vitrifiables solides. Le brûleur aérien, notamment en voûte, a une flamme impactant la surface du bain fondu au dessus de la flamme du brûleur immergé, et contribue à la fusion des matières vitrifiables.

On connaît les brûleurs immergés pour la fusion du verre notamment par les WO9935099 et WO9937591. On connaît les brûleurs en voûte pour la fusion du verre notamment par les WO02/092521, US6237369, WO9931021, WO02/090271. Comme autres documents, on peut citer les US5139558, EP1236691, JP2002284532, US5922097, US2002166343. Le document SU425853 enseigne un four de fusion du verre comprenant une multiplicité de brûleurs immergés, la dernière rangée en aval de brûleurs immergés étant destinée à faire barrage aux infondus. Un brûleur aérien à flamme horizontale ne touchant pas la surface du verre fondu complète le dispositif.

Les matières vitrifiables sont introduites en amont du four. Pour une bonne qualité du verre, on souhaite leur fusion parfaite, c'est-à-dire l'absence d'infondus dans le verre final. Or il est difficile d'empêcher que certaines matières vitrifiables ne circulent dans le four plus rapidement que d'autres et ne ressortent infondues, en mélange avec du verre fondu, au détriment de l'homogénéité et la qualité optique du verre final. La présente invention contribue à résoudre ce problème.

Selon l'invention, on associe au moins un brûleur immergé avec au moins un brûleur aérien, notamment placé en voûte, dont la flamme impacte la surface du bain fondu (en verre) au dessus de la flamme (ou la bulle, compte tenu du fait que ce sont généralement des gaz de combustion qui émergent du verre fondu et non pas une flamme) du brûleur immergé, de façon à produire une zone localement très chaude en surface du verre et éliminer les infondu en parvenant à les fondre. Ce dispositif peut être complété par un barrage de brûleurs immergés pour augmenter encore l'efficacité du dispositif et parvenir à fondre les matières solides. Dans ce qui suit, on peut appeler « brûleur de surface » le brûleur aérien dont la flamme impacte la surface du verre au dessus de la flamme du brûleur immergé. Ainsi, le four selon l'invention est équipé d'au moins un brûleur aérien, ledit brûleur aérien étant associé à au moins un brûleur immergé, la flamme dudit brûleur aérien touchant la surface du bain fondu à l'endroit ou émerge la bulle dudit brûleur immergé. Un tel brûleur aérien est dit « brûleur de surface » dans le cadre de la présente demande. Selon l'invention, un barrage comprenant au moins un brûleur immergé empêche les matières vitrifiables de passer en aval dudit barrage. Les matières vitrifiables ne peuvent plus alors traverser le barrage qu'à l'état fondu. Le barrage apporte de plus de la chaleur contribuant à la fusion de toute matière vitrifiable le traversant.

Le brûleur immergé remonte les matières (fondues et infondues) plus froides, se trouvant naturellement au fond du four, vers la surface, et les renvoie en aval du four après les avoir réchauffées. Le brûleur de surface qui lui est associé, contribue à accélérer la fusion, en association avec le brûleur immergé lui-même.

Ainsi l'invention concerne en premier lieu un four de fusion de matières vitrifiables comprenant en amont de la direction d'écoulement des matières fondues, une zone d'introduction de matières vitrifiables solides, ledit four comprenant un brûleur immergé et un brûleur de surface qui est un brûleur aérien procurant une flamme venant toucher la surface du verre à l'endroit ou la bulle du brûleur immergé émerge.

L'invention concerne le principe de la combinaison d'un brûleur immergé et d'un brûleur de surface, notamment placé en voûte, ledit brûleur immergé pouvant avoir la fonction d'effet barrière pour les matières vitrifiables. La flamme issue du brûleur de surface impacte le verre au dessus de la flamme (ou la bulle, compte tenu du fait que ce sont généralement des gaz de combustion qui émergent du verre fondu et non pas une flamme) du brûleur immergé, de façon à produire une zone localement très chaude en surface. Comme le brûleur immergé fait remonter des matières plus froides en surface, ces matières sont réchauffées d'une part par la flamme du brûleur immergé et d'autre part par celle du brûleur de surface. Il s'agit là d'un moyen d'apporter directement des calories aux matières les plus froides. Une telle efficacité ne peut pas être atteinte si l'on remplace le brûleur immergé par un bouillonneur (gaz non enflammés) ou des fumées de combustion récupérées, car ces gaz contribueraient au refroidissement préalable des matières remontées ce qui serait contre-productif.

Le brûleur de surface (généralement en voûte), qui est dimensionné de façon à ce que la combustion des gaz se réalise au niveau de la bulle du brûleur immergé, réchauffe de façon sélective le verre froid remontant en surface. Les transferts thermiques qui dépendent de la différence de températures entre la source chaude et le point froid sont donc fortement améliorés. Ainsi, en travaillant à tirée de verre constante, l'invention permet de réduire les consommations énergétiques. En gardant des températures de superstructure (limite supérieure de température que supporte les matériaux constituant le four) constantes, il est également possible d'augmenter la tirée.

Le brûleur immergé peut également faire partie d'un barrage de brûleurs immergés produisant chacun des mouvements de convection dans le bain fondu et empêchant les matières vitrifiables solides d'aller vers l'aval du four. Notamment si le four est large, on préfère constituer un barrage aux matières vitrifiables par une multiplicité de brûleurs immergés. Ces brûleurs immergés sont alors de préférence placés en ligne en travers de la direction principale d'écoulement des matières fondues. Cette direction principale correspond à la direction de l'amont vers l'aval, selon l'axe du four. On peut décaler légèrement les brûleurs immergés par rapport à une ligne droite, dès lors que l'effet barrage est obtenu. Les bulles issues du brûleur immergé impriment un mouvement de convection aux matières solides et renvoi celles-ci vers l'amont du four. On place donc autant de brûleurs immergés pour constituer ce barrage que la largeur du four le nécessite, sachant que chaque brûleur immergé aura un effet barrage sur un rayon un peu supérieur à celui de sa bulle émergente. Les matières vitrifiables non fondues sont renvoyées en amont. Seule de la matière fondue peut passer le barrage. Le barrage de brûleur immergé réchauffe les matières infondues, et, le cas échéant, fini de les fondre. Les matières infondues suivent des courroies de convection en amont du barrage, autant de fois que cela est nécessaire jusqu'à leur fusion. L'efficacité du système de barrage est augmenté par le fait qu'un brûleur aérien procure une flamme venant impacter la surface du verre (« brûleur de surface ») à l'endroit ou la bulle du brûleur immergé émerge. Pour le cas où le barrage ne comprend qu'un seul brûleur immergé, celui-ci est généralement situé au milieu de la largeur du four (à mi-distance entre les parois latérales du four). Pour le cas où le barrage comprend plusieurs brûleurs immergés, on peut ne prévoir qu'un seul brûleur de surface, de préférence dont la flamme touche la surface du verre au milieu de la largeur du bain de verre. De préférence, cependant, on prévoit autant de brûleur de surface que de brûleur immergé, lesdits brûleurs de surface étant placés préférentiellement en face à la verticale de chaque brûleur immergé, de sorte que la flamme d'un brûleur de surface touche (en un impact prononcé) l'endroit d'émergence de la flamme (ou bulle) d'un brûleur immergé. Le barrage comprend alors des couples brûleur immergé / brûleur de surface, chaque brûleur immergé étant associé à un brûleur de surface.

Le four selon l'invention peut comprendre plusieurs barrages successifs (2 ou 3 voir plus) sur le chemin des matières fondues, chaque barrage comprenant chacun au moins un brûleur immergé.

De préférence, les gaz provenant de chaque brûleur de surface arrive avec une vitesse assez élevée à la surface du verre, par exemple avec une vitesse d'au moins 15 mètres par seconde. Cette vitesse peut être beaucoup plus importante, et on la règle aussi en fonction du risque d'envol de matières en surface du bain. Notamment, si la flamme du brûleur de surface arrive à proximité d'un talus de composition, on préfère limiter la vitesse de ses gaz pour ne pas provoquer d'envol de matière provenant de ce talus. Cette vitesse peut par exemple aller jusqu'à 150 m/s, et en cas de risque d'envol de matières vitrifiables de préférence jusqu'à 40 m/s.

Pour le cas ou l'on aurait constitué un barrage de brûleurs immergés, le nombre de brûleurs immergés à utiliser pour constituer le barrage est suffisant pour que les matières infondues ne le traversent pas et soient renvoyées vers l'amont. Approximativement , il convient généralement de placer un nombre $N_{min}$ de brûleurs immergés en travers du trajet des matières vitrifiables tel que $N_{min}$ soit au moins égal à la partie entière de [80% de L/2H], si L est la largeur du four et si H est la hauteur du bain fondu (verre fondu) dans le four (exemple : si le four fait 3 m de large et si la hauteur de verre est de 0,5 m, alors U2H=3 donc 80% de L/2H=2,4 dont la partie entière est 2 ; on a donc $N_{min}$ au moins égal à 2). De manière encore préférée, on place un nombre $N_{min}$ de brûleurs immergés en travers du trajet des matières vitrifiables tel que $N_{min}$ soit au moins égal à la partie entière de U2H (exemple : si le four fait 3 m de large et si la hauteur de verre est de 0,5 m, alors L/2H=3 donc $N_{min}$ est de préférence au moins égal à 3). En général, il suffit de mettre dans le barrage un nombre $N_{suff}$ de brûleurs immergés tel que $N_{suff}$ soit au plus égal à 1 + la partie entière de [120% de U2R], si L est la largeur du four et si R est le rayon de la bulle émergente d'un brûleur immergé. Plus généralement encore, il est même suffisant de mettre dans le barrage un nombre $N_{suff}$ de brûleurs immergés tel que $N_{suff}$ soit au plus égal à 1 + la partie entière de [L/2R].

Le diamètre de la bulle émergente d'un brûleur immergé peut se déterminer par observation visuelle.

A titre d'indication, le rayon R (en mètres) de la bulle d'un brûleur immergé (alimenté en oxygène pur comme comburant et en méthane comme combustible), au moment ou elle atteint la surface, est au moins égale à:

$$R = \frac{[\,3 \times 0{,}87 \times 3.10^{-7} \times T \times P \times v^{1/3}\,]^{1/3}}{4 \times 3{,}14}$$

Dans laquelle

- T est la température du verre en Kelvin,
- P est la puissance du brûleur en KW
- V est la viscosité cinématique du verre en $m^2$/seconde.

Dans la réalité, son diamètre est un peu supérieur du fait de l'effet d'écrasement à l'arrivée en surface. Le diamètre réel est donc environ 10 à 20% supérieur à ce que donne la formule.

La puissance d'un brûleur immergé peut par exemple aller de 10 à 150 kW. La puissance d'un brûleur aérien transversal peut par exemple aller de 100 à 1000 kW. La puissance d'un brûleur aérien de surface peut par exemple aller de 300 à 3000 kW.

Dans un barrage de brûleurs immergés, l'ensemble des brûleurs immergés est disposé régulièrement, à intervalle régulier, en travers du bain de verre de façon à produire l'effet barrage. Si le barrage comprend plusieurs brûleurs immergés, il comprends deux brûleurs immergés plus près chacun de l'une des parois transversales du four. Ces brûleurs, placés aux extrémités du barrage, sont distants d'une distance d de leur paroi la plus proche. Dans ce cas, la distance entre deux brûleurs immergés du même barrage est de préférence de 2d. De préférence, 2d correspond sensiblement au diamètre de la bulle émergente du brûleur immergé.

Le four selon l'invention peut donc avoir un barrage comprenant plusieurs brûleurs immergés, un brûleur de surface différent étant associé à chaque brûleur immergé du barrage.

Le four selon l'invention peut être équipé de brûleurs aériens transversaux.

En plus de la combinaison du brûleur immergé et du brûleur de surface qui lui est associé, ainsi que de l'éventuel barrage de brûleur(s) immergé(s), le four peut également être équipé de brûleurs transversaux aérien, traversant les parois latérales du four. Des paires d'électrodes chauffant directement le verre fondu, notamment au travers de la sole, peuvent également participer au chauffage global du four.

Par rapport à un four classique équipé de brûleurs aériens (dont la flamme n'est pas spécialement dirigée vers la surface du bain fondu), l'invention améliore considérablement les transferts thermiques au bain de verre. En effet, le brûleur immergé augmente la convection dans le four et fait remonter en permanence du verre froid à la surface du bain de verre. Cette augmentation de la convection se fait sans refroidir la sole, ce que ne permettrait pas un simple bouillonnement de gaz froids ou de fumées. D'ailleurs, généralement, le volume de gaz envoyé par un bouillonneur ne représente que 10% du volume de gaz généré par un brûleur immergé. Des fumées de combustion ont généralement une température de l'ordre de 1500 à 1600°C, alors qu'une flamme de brûleur immergé a une température supérieure, notamment supérieure à 1800°C, de l'ordre de 2000°C (plutôt dans le cas d'une combustion air/gaz combustible) à 2500°C (plutôt dans le cas d'une combustion oxygène/gaz combustible). Les gaz de combustion se refroidissent rapidement dès lors qu'ils doivent être transportés. Par rapport à un bouillonneur (même alimenté en gaz chauds de combustion), un brûleur immergé apporte beaucoup plus d'énergie thermique directement dans le verre du fait de la combustion qui y intervient directement.

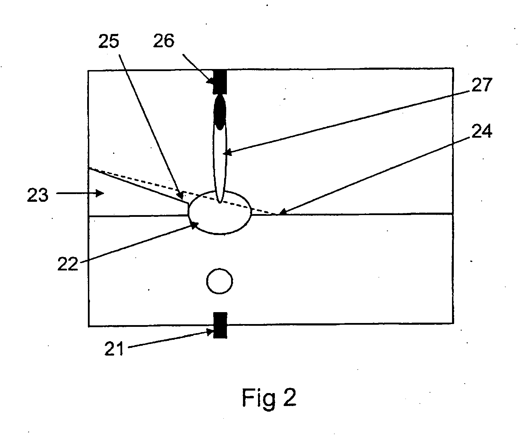

Les matières vitrifiables peuvent être introduites au dessus du bain de verre, auquel cas elles forment un talus de composition, pouvant flotter (selon leur nature) sur les matières fondues. Elles peuvent également être introduites en dessous du bain de verre. Le brûleur immergé (et donc également l'éventuel barrage dont il fait partie) est généralement placé entre la fin du talus de composition et la sortie du four, par exemple entre la fin du talus de composition et le milieu du four entre son entrée et sa sortie. En fait, par rapport au talus de composition qui se formerait en l'absence de brûleur immergé et en l'absence de brûleur de surface, il est avantageux de placer le brûleur immergé à l'extrémité dudit talus, de façon à ce qu'il rogne (c'est-à-dire raccourcisse) ledit talus. Cet aspect est plus particulièrement développé dans la figure 2. L'invention concerne donc également le procédé selon lequel les matières vitrifiables sont introduites au-dessus du bain fondu et forment un talus de composition, le brûleur immergé (et donc également l'éventuel barrage dont il fait partie) étant placé à l'extrémité dudit talus.

Les matières vitrifiables peuvent comprendre des matières premières, mais aussi du calcin, voire des déchets destinés à être vitrifiés. Elles peuvent comprendre également des éléments combustibles (organiques) : on peut ainsi recycler, par exemple, des fibres minérales ensimées, avec liant (du type de celles utilisées dans l'isolation thermique ou acoustique ou de celles utilisées dans le renforcement de matière plastique), des vitrages feuilletés avec des feuilles de polymère du type polyvinylbutyral tels que des parebrises, ou tout type de matériau " composite " associant du verre et des matériaux plastiques tels que certaines bouteilles. On peut aussi recycler des " composites verre-métal ou composés métalliques " tels que vitrages fonctionnalisés avec des revêtements contenant des métaux, jusque-là difficiles à recycler car cela risquait d'entraîner un enrichissement progressif de la chambre de fusion en métaux s'accumulant à la surface de la sole. Mais le brassage imposé par la fusion par le ou les brûleurs immergés permet d'éviter cette sédimentation, et ainsi de recycler, par exemple, des vitrages revêtus de couches d'émail, de couches de métal et/ou de différents éléments de connectique.

On peut prévoir d'introduire tout ou partie des matières vitrifiables dans la chambre de fusion sous le niveau de la masse des matières vitrifiables en cours de fusion. On peut introduire une partie de ces matières de façon habituelle au-dessus de la masse en cours de liquéfaction, et le reste en-dessous, par exemple par des moyens d'amenée du type vis sans fin. On peut ainsi introduire les matières directement dans la masse en cours de liquéfaction, en un seul point ou en différents points répartis dans les parois de la chambre de fusion. Une telle introduction directement dans la masse de matières en cours de liquéfaction (" bain de verre ") est avantageuse à plus d'un titre : d'abord, elle diminue considérablement tous les risques d'envol des matières premières au-dessus du bain de verre, donc réduit au minimum le taux de poussières solides émises par le four. Ensuite, elle permet de mieux contrôler le temps de séjour minimal desdites matières avant extraction vers la zone d'affinage, et de les introduire sélectivement là où le brassage convectif est le plus fort, selon la disposition des brûleurs immergés. Ce ou ces points d'introduction dans le bain de verre peut (peuvent) ainsi se trouver à proximité de la surface, ou plus profondément dans le bain de verre, par exemple à une hauteur de bain de verre comprise entre 1/5$^{ème}$ et 4/5$^{ème}$ de la profondeur totale du bain de verre à partir du niveau de la sole.

Chaque brûleur (immergé ou aérien, transversal ou de surface) est alimenté par un comburant et un combustible. Le comburant peut notamment être de l'air ou de l'oxygène ou de l'air enrichi en oxygène. Le combustible peut être du type combustible fossile gazeux ou non tel que du gaz naturel, le propane, du fioul liquide ou tout autre combustible hydrocarboné. Il peut aussi s'agir d'hydrogène, surtout pour les brûleurs immergés. Combiner dans une fusion par brûleurs immergés l'utilisation d'un comburant oxygène et celle d'un combustible hydrogène est un bon moyen d'assurer un transfert thermique efficace de l'énergie des brûleurs au verre en fusion, conduisant par ailleurs à un procédé totalement « propre », c'est-à-dire sans émission d'oxyde d'azote NOx, ni de gaz à effet de serre du type COx autre que celui pouvant provenir de la décarbonation des matières premières.

Selon l'invention, un brûleur de surface est associé à un brûleur immergé, la flamme du brûleur de surface touchant avec une vitesse importante l'endroit ou émergent les gaz de combustion du brûleur immergé. On peut notamment prévoir que le brûleur immergé soit surstoechiométrique en oxygène (c'est-à-dire enrichi en oxygène par rapport à ce qui serait suffisant pour brûler tout le combustible alimentant le brûleur immergé) et que le brûleur de surface qui lui est associé soit surstoechiométrique en gaz combustible (c'est-à-dire enrichi en combustible par rapport à ce qui serait suffisant pour réagir avec tout le comburant alimentant le brûleur de surface). De la sorte, une combustion secondaire intervient en surface du verre entre d'une part l'oxygène en excès du brûleur immergé et le combustible en excès du brûleur de surface, ce qui va dans le sens d'un chauffage supplémentaire bien localisé à la surface du verre, endroit par lequel passent les matières infondues. On peut aussi réaliser l'inverse, c'est-à-dire alimenter le brûleur immergé de façon surstoechiométrique en gaz combustible et le brûleur de surface de façon surstoechiométrique en oxygène pour obtenir cette combustion secondaire en surface du verre.

Chaque brûleur immergé provoque par convection un brassage intense des matières vitrifiables : des boucles de convection se forment ainsi de part et d'autre des combustions ou " flammes " ou courants de gaz de combustion, mêlant en permanence matières fondues et non encore fondues de manière très efficace. On retrouve ainsi les caractéristiques très favorables d'une fusion " agitée ", sans avoir nécessairement recours à des moyens d'agitation mécaniques peu fiables et/ou susceptibles d'usure rapide.

Ce type de fusion par brûleurs immergés permet de réduire considérablement l'émission de tout type de poussières au niveau de la chambre de fusion, et de gaz type NOx car les échanges thermiques se font très vite, évitant les pics de température susceptibles de favoriser la formation de ces gaz. Il réduit également considérablement l'émission des gaz de type $CO_2$, la consommation énergétique totale de l'installation étant plus faible qu'avec des dispositifs conventionnels (seulement par brûleurs aériens fonctionnant en inversion par exemple).

On peut optionnellement prévoir de faire précéder la fusion par une étape de préchauffage des matières vitrifiables, à une température cependant nettement inférieure à celle nécessaire pour les liquéfier, par exemple à au plus 900°C. Pour réaliser ce préchauffage, on peut avantageusement récupérer l'énergie thermique des fumées. En les épuisant ainsi thermiquement, on peut globalement diminuer la consommation énergétique spécifique de l'installation.

Le verre est généralement affiné, soit en aval du même four, et/ou dans un compartiment d'affinage en aval du four. Après affinage, le verre peut sortir par l'intermédiaire d'une gorge mais l'invention s'applique aussi aux fours sans gorges. Notamment, après affinage, le verre peut alimenter en continu une installation de formage en verre plat comme un bain de flottage du verre.

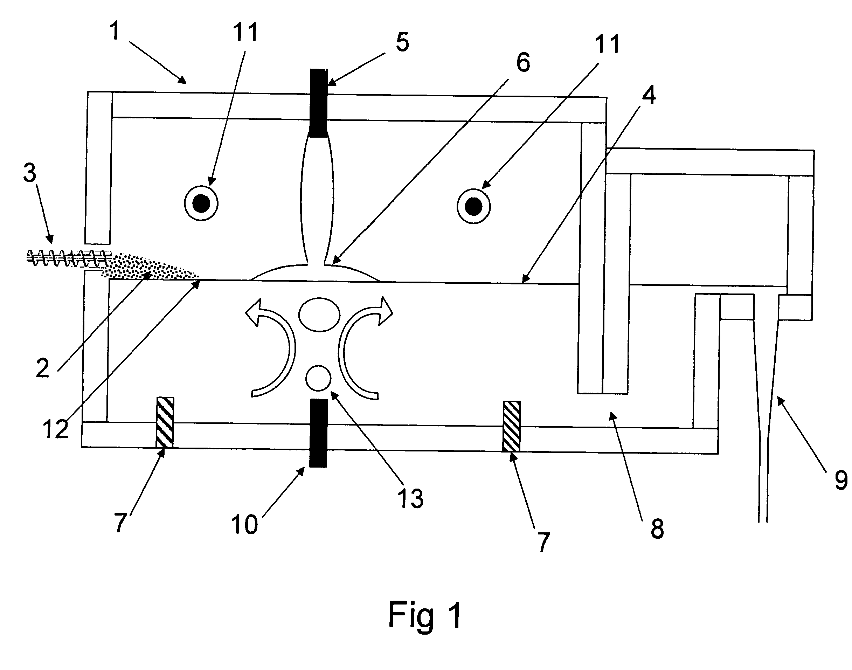

La figure 1 représente un four 1 selon l'invention vu de côté. Ce four est alimenté en matières vitrifiable 2 formant un talus de composition en amont du four, par le biais d'un dispositif d'enfournement 3 (vis sans fin) débouchant juste au dessus du niveau 4 du bain de verre. Un brûleur immergé 10 génère une flamme 13 sous forme de bulles qui montent vers la surface. Cette montée vers la surface produit des mouvements de convection représentés par des flèches. Les matières non fondues venant du talus de composition 2 (la fin du talus de composition est en 12) et approchant de l'endroit ou émerge la flamme du brûleur immergé sont repoussées vers l'amont du fait de ces mouvements de convection. Un brûleur aérien en voûte 5 produit une flamme 6 venant impacter la surface de verre fondu. Ainsi les matières infondues sont chauffées par la flamme du brûleur immergé et par la flamme du brûleur en voûte. Le chauffage du four est complété par des paires d'électrodes 7 et par des brûleurs aériens transversaux 11 placés dans les parois latérales du four. Le verre fondu coule vers l'aval du four, passe par une gorge 8 et s'écoule en 9 à travers un orifice.

La figure 2 représente schématiquement l'endroit préféré de placement du brûleur immergé 21 (et donc également de l'éventuel barrage dont il fait partie). A la verticale de ce brûleur 21 émerge en surface une bulle 22 chargée de gaz de combustion. Le brûleur est placé de préférence en bout du talus de composition 23 de sorte qu'il contribue à rogner ledit talus. La ligne en pointillé représente la forme du talus de composition en absence de brûleur immergé et en absence de brûleur de surface. Le bout de ce talus aboutirai au point 24. Le barrage de brûleur immergé vient rogner le bout de ce talus, de ce sorte que ce bout se situe maintenant au point 25. Le brûleur de surface 26 est placé à la verticale du brûleur immergé et sa flamme 27 vient toucher la surface du verre à l'endroit d'émergence de la bulle 22 du brûleur immergé 21. Le brûleur de surface contribue également à raccourcir le bout du talus. Ainsi, le brûleur immergé est placé sous l'extrémité du talus de composition qui se formerait en son absence (ligne en pointillés), de façon à ce que finalement, lorsqu'il fonctionne, ledit brûleur immergé se trouve juste en aval (par rapport au sens d'écoulement du verre) du talus de composition.

## Revendications

1. Four de fusion (1) de matières vitrifiables (2) comprenant en amont de la direction d'écoulement des matières fondues une zone d'introduction de matières vitrifiables solides (2), un brûleur immergé (10) et un brûleur aérien (5), **caractérisé en ce que** la flamme (6) du brûleur aérien dit brûleur de surface vient toucher la surface du verre (4) à l'endroit ou la bulle (13) du brûleur immergé émerge.

2. Four selon la revendication précédente, **caractérisé en ce que** le brûleur immergé (10) fait partie d'un barrage de brûleurs immergés produisant des mouvements de convection dans le bain fondu empêchant les matières vitrifiables solides d'aller vers l'aval du four.

3. Four selon la revendication précédente, **caractérisé en ce que** chaque brûleur immergé (10) du barrage est associé à un brûleur de surface (5) différent.

4. Four selon l'une des revendications 2 ou 3 caractérisé en que le nombre de brûleurs immergés dans le barrage est au moins égal à la partie entière de [80% de L/2H], si L est la largeur du four et si H est la hauteur du bain fondu dans le four.

5. Four selon l'une des revendications 2 à 4, **caractérisé en ce qu'**il comprend plusieurs barrages successifs de brûleurs immergés sur le chemin des matières fondues.

6. Procédé de fusion de matières vitrifiables **caractérisé en ce que** la fusion est réalisée dans un four de l'une des revendications précédentes.

7. Procédé selon la revendication précédente, **caractérisé en ce que** les matières vitrifiables sont introduites au-dessus du bain fondu et forment un talus de composition (23), le brûleur immergé étant placé à l'extrémité (25) dudit talus.

8. Procédé selon l'une des revendications précédentes de procédé, **caractérisé en ce que** les gaz du brûleur de surface arrivent à la surface du verre avec une vitesse d'au moins 15 mètres par seconde.

9. Procédé selon l'une des revendications précédentes de procédé, **caractérisé en ce que** la flamme du brûleur immergé est supérieure à 1800°C.

## Claims

1. Furnace (1) for melting batch materials (2), comprising, upstream in the direction of flow of the molten materials, a zone for introducing solid batch materials (2), a submerged burner (10) and an overhead burner (5), **characterized in that** the flame (6) of the overhead burner, called a surface burner, touches the surface of the glass (4) at the point where the bubble (13) from the submerged burner emerges.

2. Furnace according to the preceding claim, **characterized in that** the submerged burner (10) forms part of a dam of submerged burners producing convection currents in the glass melt, preventing the solid batch materials from going toward the downstream end of the furnace.

3. Furnace according to the preceding claim, **characterized in that** each submerged burner (10) of the dam is associated with a different surface burner (5).

4. Furnace according to either of Claims 2 and 3, **characterized in that** the number of submerged burners in the dam is at least equal to the integer part of [80% of L/2H], where L is the width of the furnace and H is the height of the glass melt in the furnace.

5. Furnace according to one of Claims 2 to 4, **characterized in that** it includes several successive dams of submerged burners along the path of the molten materials.

6. Method of melting batch materials, **characterized in that** the melting is carried out in a furnace of one of the preceding claims.

7. Method according to the preceding claim, **characterized in that** the batch materials are introduced above the glass melt and form a batch heap (23), the submerged burner being positioned at the end (25) of said heap.

8. Method according to one of the preceding method claims, **characterized in that** the gases from the surface burner arrive at the surface of the glass with a velocity of at least 15 meters per second.

9. Method according to one of the preceding method claims, **characterized in that** the flame of the submerged burner is at above 1800°C.


**Patentansprüche**

1. Ofen zum Schmelzen (1) von verglasbaren Materialien (2), der der Ablaufrichtung der geschmolzenen Materialien vorgeordnet einen Bereich zum Eintragen von festen verglasbaren Materialien (2), einen Tauchbrenner (10) sowie einen Überkopfbrenner (5) umfasst, **dadurch gekennzeichnet, dass** die Flamme (6) des Überkopfbrenners, ein sogenannter Oberflächenbrenner, die Oberfläche des Glases (4) an der Stelle berührt, an der die Blase (13) des Tauchbrenners zum Vorschein kommt.

2. Ofen nach dem vorstehenden Anspruch, **dadurch gekennzeichnet, dass** der Tauchbrenner (10) zu einem Wehr von Tauchbrennern gehört, die Konvektionsbewegungen in der Schmelze erzeugen, welche die festen verglasbaren Materialien daran hindern, sich stromabwärts des Ofens zu bewegen.

3. Ofen nach dem vorstehenden Anspruch, **dadurch gekennzeichnet, dass** jeder Tauchbrenner (10) des Wehrs einem anderen Oberflächenbrenner (5) zugeordnet ist.

4. Ofen nach einem der Ansprüche 2 oder 3, **dadurch gekennzeichnet, dass** die Anzahl der Tauchbrenner in dem Wehr wenigstens gleich dem Ganzzahlanteil von [80 % von L/2H] ist, wenn L die Breite des Ofens ist und wenn H die Höhe der Schmelze in dem Ofen ist.

5. Ofen nach einem der Ansprüche 2 bis 4, **dadurch gekennzeichnet, dass** er mehrere aufeinanderfolgende Wehre von Tauchbrennern auf dem Weg der geschmolzenen Materialien umfasst.

6. Verfahren zum Schmelzen von verglasbaren Materialien, **dadurch gekennzeichnet, dass** das Schmelzen in einem Ofen von einem der vorstehenden Ansprüche vollzogen wird.

7. Verfahren nach dem vorstehenden Anspruch, **dadurch gekennzeichnet, dass** die verglasbaren Materialien oberhalb der Schmelze eingebracht werden und eine Zusammensetzungsschräge (23) bilden, wobei der Tauchbrenner an dem Ende (25) der Schräge angeordnet ist.

8. Verfahren nach einem der vorstehenden Verfahrensansprüche, **dadurch gekennzeichnet, dass** die Gase des Oberflächenbrenners an der Oberfläche des Glases mit einer Geschwindigkeit von wenigstens 15 Metern pro Sekunde ankommen.

9. Verfahren nach einem der vorstehenden Verfahrensansprüche, **dadurch gekennzeichnet, dass** die Flamme des Tauchbrenners mehr als 1800 °C beträgt.

Fig 1

Fig 2

## RÉFÉRENCES CITÉES DANS LA DESCRIPTION

**Documents brevets cités dans la description**

- WO 9935099 A
- WO 9937591 A
- WO 02092521 A
- US 6237369 B
- WO 9931021 A
- WO 02090271 A
- US 5139558 A
- EP 1236691 A
- JP 2002284532 B
- US 5922097 A
- US 2002166343 A
- SU 425853